# EUROPÄISCHE PATENTSCHRIFT

(11) **EP 0 907 322 B1**
(45) Veröffentlichungstag und Bekanntmachung des Hinweises auf die Patenterteilung: **05.12.2001**
(21) Anmeldenummer: 97926910.7
(22) Anmeldetag: 19.06.1997
(51) Int. Cl.: A21C 15/02, A21C 15/00, A21C 9/08

(54) **VORRICHTUNG ZUM INTERMITTIERENDEN WEITERGEBEN VON GEGENSTÄNDEN, INSBESONDERE VON BESCHICHTETEN WAFFELBLÄTTERN ODER GEFÜLLTEN WAFFELBLÖCKEN**
DEVICE FOR INTERMITTENTLY TRANSPORTING OBJECTS, IN PARTICULAR COATED WAFER SHEETS OR FILLED WAFER BLOCKS
DISPOSITIF DE TRANSPORT INTERMITTENT D'OBJETS, NOTAMMENT DE FEUILLES DE GAUFRES ENDUITES OU DE BLOCS DE GAUFRES FOURRES

(30) Priorität: 25.06.1996 AT 112196
(43) Veröffentlichungstag der Anmeldung: 14.04.1999
(73) Patentinhaber: FRANZ HAAS WAFFELMASCHINEN-INDUSTRIE AKTIENGESELLSCHAFT, 1210 Wien (AT)
(72) Erfinder: HAAS, Franz, Sen., A-1210 Wien (AT); HAAS, Johann, A-3400 Klosterneuburg (AT); KOLETNIK, Erich, A-3400 Klosterneuburg/Kierling (AT)
(74) Vertreter: Berger, Erhard, Dr.
(86) Internationale Anmeldenummer: AT9700134
(87) Internationale Veröffentlichungsnummer: WO9749290

(56) Entgegenhaltungen:
- DE-A- 2 913 042
- DE-A- 3 505 596
- DE-A- 3 630 895

## Beschreibung

### Hintergrund der Erfindung:

Die Erfindung bezieht sich allgemein auf eine Vorrichtung zum Weitergeben von Gegenständen, bei welcher die Gegenstände auf einer Transportebene nacheinander bis gegen einen absenkbaren Anschlag vorgeschoben werden, der jeden Gegenstand für kurze Zeit anhält und nach einem vorgegebenen Zeitintervall abgesenkt wird, um den betreffenden Gegenstand für seinen Weitertransport wieder freizugeben. Bei dieser Vorrichtung bestimmen die intermittierenden Hub- und Senkbewegungen des Anschlages die zeitlichen bzw. räumlichen Abstände zwischen unmittelbar aufeinanderfolgenden Gegenständen.

Im einzelnen bezieht sich die Erfindung auf eine Vorrichtung zum intermittierenden Weitergeben von Gegenständen, bei denen die an ihren Oberseiten oder in ihrem Inneren angeordneten, pastösen Masseschichten bis an die vorderen Stirnseiten der Gegenstände reichen, weshalb diese Gegenstände mit ihren vorderen Stirnseiten beim Anhalten durch den Anschlag an dessen Anschlagfläche haften bleiben können. Derartige Gegenstände sind beispielsweise an der Oberseite mit einer noch nicht verfestigten, pastösen oder cremigen Masse beschichtete Waffelblätter oder mit einer solchen Masse gefüllte Waffelblöcke, wie sie in den Anlagen zur industriellen Herstellung von gefüllten, zwei- oder mehrlagigen Waffeln der Backwaren- bzw. Waffelbackwaren- bzw. Süßwarenindustrie hergestellt und intermittierend weitertransportiert werden.

### Stand der Technik:

Aus der Backwaren- bzw. Waffelbackwaren- bzw. Süßwarenindustrie sind kontinuierlich arbeitende Produktionsanlagen zur industriellen Herstellung von gefüllten, zwei- oder mehrlagigen Waffeln bekannt. In den einzelnen Abschnitten dieser Produktionsanlagen werden Waffelblätter aus Waffelteig hergestellt und ein Teil der gebackenen Waffelblätter wird an der Oberseite mit einer eßbaren Creme beschichtet, während die übrigen gebackenen Waffelblätter unbeschichtet bleiben. Die beschichteten und unbeschichteten Waffelblätter werden übereinandergeschichtet und dabei zu zwei- oder mehrlagigen, mit Creme gefüllten Waffelblöcken zusammengefügt, welche zum Verfestigen der Creme gekühlt und später als gekühlte Waffelblöcke in kleine gefüllte Waffeln zerteilt werden.

Innerhalb einer solchen Produktionsanlage werden die Waffelblätter und die aus ihnen hergestellten Waffelblöcke von einem Abschnitt der Produktionsanlage zum nächsten Abschnitt fortlaufend weiterbefördert und dabei jeweils an den Arbeitstakt des jeweils nachfolgenden Anlagenabschnittes angepaßt. Dies geschieht zumeist durch eine Vorrichtung zum intermittierenden Weitergeben dieser Gegenstände, welche in einen Anlagenabschnitt integriert ist und den intermittierenden Transport dieser Gegenstände an den Arbeitstakt des nachfolgenden Anlagenabschnittes anpaßt. Innerhalb einer solchen Vorrichtung wird jeder Gegenstand durch eine Arbeitsmaschine des betreffenden Anlagenabschnittes oder durch eine eigene Transportvorrichtung in Transportrichtung bis gegen einen absenkbaren Anschlag bewegt, vom Anschlag angehalten und nach dem Absenken des Anschlages in einem vorgegebenen Arbeitstakt an den nachfolgenden Anlagenabschnitt weitergegeben.

Eine bekannte Vorrichtung zum intermittierenden Weitergeben der Gegenstände umfaßt eine, die Gegenstände in einer Transportebene in Transportrichtung vorschiebende Transportvorrichtung, der in Transportrichtung ein, unter die Transportebene absenkbarer, mit einer der vorderen Stirnseite der Gegenstände zugeordneten Anschlagfläche versehener Anschlag nachgeordnet ist. Der Anschlag ist als Schwert ausgebildet, das zwischen zwei unterhalb der Transportebene angeordneten, schräg nach unten abfallenden, stationären Abstreifern vertikal auf und ab bewegt wird. Der Anschlag wird durch einen Bewegungsmechanismus zwischen einer oberen Stellung, in der er mit seiner Anschlagfläche über die Transportebene nach oben vorsteht, und einer unteren Stellung, in der er unter die Transportebene abgesenkt ist, hin und her bewegt. Beim Absenken gleitet der Anschlag mit seiner Vorderseite und Rückseite an den beiden Abstreifern entlang, bis seine Oberkante unter die beiden Abstreifer abgesenkt ist. Dabei werden Cremereste, die auf der, an der Vorderseite des Anschlages angeordneten Anschlagfläche haften geblieben sind, von der nach oben weisenden Stirnseite des vorderen Anschlages von der Anschlagfläche abgestreift und an den hinteren Abstreifer übergeben. Mit der Zeit sammeln sich die Cremereste auf beiden Abstreifern an und bauen sich dort auf, sodaß beim Anheben des Anschlages ein Teil der Cremereste wieder auf die Anschlagfläche zurück übertragen werden kann. Um dies zu verhindern werden die Abstreifer von Zeit zu Zeit gereinigt. Da dazu nicht nur jener Teil der Produktionsanlage stillgesetzt werden muß, in den die Vorrichtung zum intermittierenden Weitergeben der Gegenstände integriert ist, sondern die gesamte Produktionsanlage wird diese Reinigung nur während einer planmäßigen Produktionsunterbrechung z.B am Ende eines Arbeitstages durchgeführt.

In seiner oberen Stellung steht der Anschlag mit seiner Anschlagfläche über die Transportebene nach oben vor und unterbricht den Vorschub des jeweiligen Gegenstandes. Dieser wird von der Transportvorrichtung in Transportrichtung vorgeschoben, bis sein vorderes Ende über die Transportvorrichtung hinaus vorsteht und an die Anschlagfläche das Anschlages angedrückt wird. Der Gegenstand liegt dann mit seiner vorderen Stirnseite an der Anschlagfläche an und die mit der Anschlagfläche in Berührung kommenden Teile der Creme bilden mit der Anschlagfläche eine Haftverbindung, die beim Absenken des Anschlages zerstört werden muß, ohne den Gegenstand zu beschädigen.

Beim Absenken des Anschlages aus seiner oberen Stellung schert dieser an der vorderen Stirnseite des Gegenstandes entlang. Dabei entstehen in der Haftverbindung zwischen der vorderen Stirnseite des Gegenstandes und der Anschlagfläche des Anschlages Scherkräfte, die diese Haftverbindung auflösen und das über das vordere Ende der Transportvorrichtung hinaus vorstehende vordere Ende des Gegenstandes auf Biegung beanspruchen. Dies kann bei den sehr spröden und leicht zerbrechlichen Waffelblättern bzw. Waffelblöcke zum Bruch führen. Nach dem Lösen der Haftverbindung sinkt der Anschlag unter die Transportebene ab und gibt den Gegenstand frei, so daß dieser von der Transportvorrichtung weiter vorgeschoben werden kann.

### Zusammenfassung der Erfindung:

Aufgabe der Erfindung ist es, diese Nachteile zu beseitigen.

Zur Lösung dieser Aufgabe wird eine Vorrichtung zum intermittierenden Weitergeben von Gegenständen, insbesondere von mit Creme beschichteten Waffelblättern oder mit Creme gefüllten Waffelblöcken oder dergleichen vorgeschlagen. Bei dieser Vorrichtung ist einer die Gegenstände in einer Transportebene in Transportrichtung vorschiebenden Vorrichtung zumindest ein unter die Transportebene absenkbarer Anschlag nachgeordnet, welcher eine der vorderen Stirnseite der Gegenstände zugeordnete Anschlagfläche besitzt. Der Anschlag ist durch einen Bewegungsmechanismus zwischen einer oberen Stellung, in der er mit seiner Anschlagfläche über die Transportebene nach oben vorsteht, und einer unteren Stellung, in der er unter die Transportebene abgesenkt ist, hin und her bewegbar. Entlang der Bewegungsbahn der Anschlagfläche ist zumindest ein dieser zugeordneter Abstreifer vorgesehen.

Diese Vorrichtung zum intermittierenden Weitergeben von Gegenständen ist erfindungsgemäß dadurch gekennzeichnet, daß der Anschlag aus einem vom Bewegungsmechanismus auf und ab bewegbaren Formkörper und aus einer gegenüber diesem beweglichen Anschlagfläche besteht, die aus einer der vorderen Stirnseite der Gegenstände zugeordneten Arbeitsstellung in eine davon entfernte Ruhestellung bewegbar ist und von einem, zumindest entlang der der vorderen Stirnseite der Gegenstände zugewandten Vorderseite des Formkörpers bewegbaren Band gebildet wird.

Diese Ausbildung erlaubt es, eine allfällige Haftverbindung zwischen der Anschlagfläche des Anschlages und der vorderen Stirnseite des Gegenstandes dadurch aufzulösen, daß das zwischen der vorderen Stirnseite des Gegenstandes und der Vorderseite des Formkörpers angeordnete Band an der Außenseite des Formkörpers entlang aus seiner Arbeitsstellung in seine davon entfernte Ruhestellung bewegt wird. Die zum Ablösen der Anschlagfläche von der vorderen Stirnseite des Gegenstandes eingesetzte Bewegung kann unabhängig von den Arbeitsbewegungen des Formkörpers gewählt werden. Bei der erfindungsgemäßen Ausbildung des Anschlages übernimmt der vom Bewegungsmechanismus auf und ab bewegbare Formkörper die Stützfunktion des Anschlages, während die Anschlagfläche relativ zum Formkörper bewegbar ausgebildet ist.

Durch die erfindungsgemäße Ausbildung wird bei Gegenständen mit klebrigen Stirnseiten das Ablösen des Anschlages von der Stirnseite des Gegenstandes erleichtert. Bei leicht zerbrechlichen Gegenständen mit klebrigen Stirnseiten wird die durch das Ablösen des Anschlages verursachte Biegebeanspruchung der Gegenstände ausgeschaltet und damit die für die Gegenstände bestehende Bruchgefahr beim Absenken des Anschlages gesenkt bzw. eliminiert.

Gemäß einem weiteren Merkmal der Erfindung kann das Band auf der Außenseite des Formkörpers anliegen, diesen zumindest teilweise umschließen und mit einem Teilbereich die Anschlagfläche des Anschlages bilden.

Durch die Bewegung des Bandes wandern die Massereste, die beim Lösen der Haftverbindung an dem die bewegliche Anschlagfläche bildenden Teilbereich des Bandes haften geblieben sind, zusammen mit diesem Teilbereich an der Außenseite des Formkörpers entlang bis in die Ruhestellung des Bandes, in der sie vom Band bzw. von der beweglichen Anschlagfläche abgestreift werden können.

Gemäß einem weiteren Merkmal der Erfindung kann die bewegliche Anschlagfläche als Teil einer, den Formkörper an seiner Vorderseite und an seiner Rückseite bedeckenden, beweglichen Bandschlaufe ausgebildet sein, die mit ihrem, die bewegliche Anschlagfläche bildenden Teilbereich aus der an der Vorderseite des Formkörpers angeordneten Arbeitsstellung in die an der Rückseite des Formkörpers angeordnete Ruhestellung bewegbar ist.

Gemäß einem weiteren Merkmal der Erfindung kann die bewegliche Bandschlaufe unterhalb der Transportebene zwischen der die Gegenstände vorschiebenden Vorrichtung und der Bewegungsbahn des Formkörpers stationär fixiert und durch die Bewegungen des Formkörpers auf und ab bewegbar sein, wobei der die bewegliche Anschlagfläche bildende Teilbereich der Bandschlaufe durch Absenken des Formkörpers aus der Arbeitsstellung über die Oberseite des Formkörpers hinweg in Transportrichtung bis in die Ruhestellung und durch Anheben des Formkörpers aus der Ruhestellung entgegen der Transportrichtung über die Oberseite des Formkörpers hinweg bis in die Arbeitsstellung bewegbar ist.

Gemäß einem weiteren Merkmal der Erfindung kann entlang der Bewegungsbahn des die bewegliche Anschlagfläche bildenden Teilbereiches des Bandes zumindest ein stationärer Abstreifer vorgesehen sein, der der sich aus der Arbeitsstellung in die Ruhestellung bewegenden, beweglichen Anschlagfläche zugeordnet ist.

Bei dieser Ausbildung wird die bewegliche Anschlagfläche mit der Absenkbewegung des Formkörpers aus der Arbeitsstellung in die Ruhestellung bewegt und dabei an dem stationären Abstreifer entlang bewegt, der an der beweglichen Anschlagfläche haften gebliebene Massereste von der Anschlagfläche abstreift.

Gemäß einem weiteren Merkmal der Erfindung kann entlang der Bewegungsbahn des die bewegliche Anschlagfläche bildenden Teilbereiches des Bandes zumindest ein beweglicher Abstreifer vorgesehen sein, der der sich aus der Ruhestellung in die Arbeitsstellung bewegenden, beweglichen Anschlagfläche zugeordnet ist.

Bei dieser Ausbildung wird die bewegliche Anschlagfläche zuerst mit der Absenkbewegung des Formkörpers aus der Arbeitsstellung in die Ruhestellung und am beweglichen Abstreifer vorbeibewegt, der sich ebenfalls in seiner Ruhestellung befindet. Der bewegliche Abstreifer tritt erst bei der durch die Hubbewegung des Formkörpers hervorgerufenen Rückführbewegung in Aktion, während der er die auf der beweglichen Anschlagfläche haftenden Massereste entgegengesetzt zur Bewegung des Bandes von der beweglichen Anschlagfläche abstreift.

Der beweglicher Abstreifer kann zusätzlich zum stationären Abstreifer eingesetzt werden, um während der Rückführbewegung des Bandes von diesem beim Passieren des stationären Abstreifers allenfalls mitgenommene Massereste von der beweglichen Anschlagfläche abzustreifen und endgültig von dieser zu entfernen.

### Kurze Beschreibung der Zeichnungen:

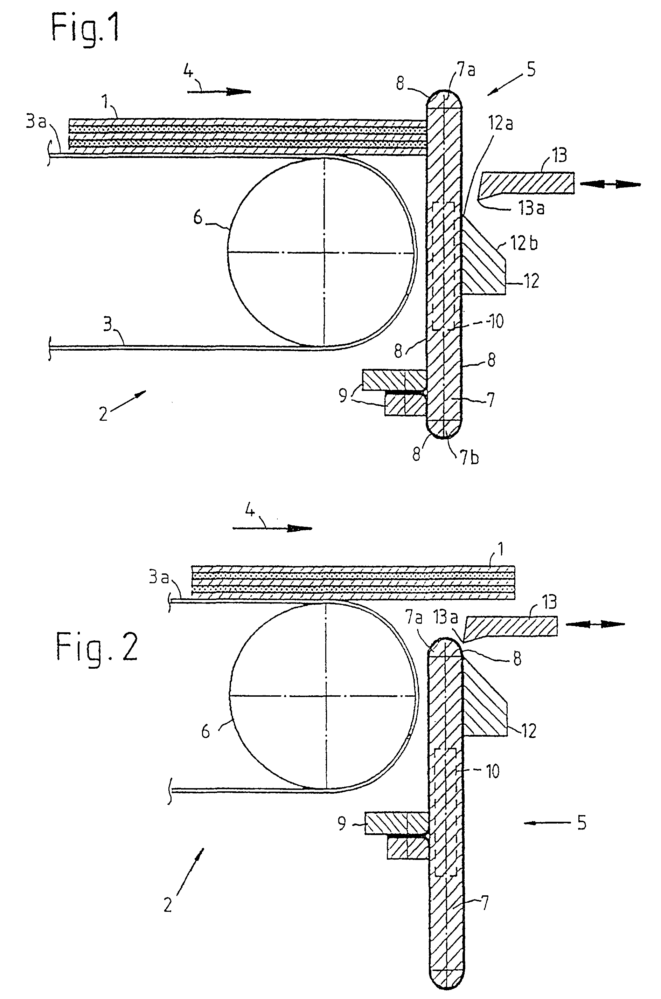

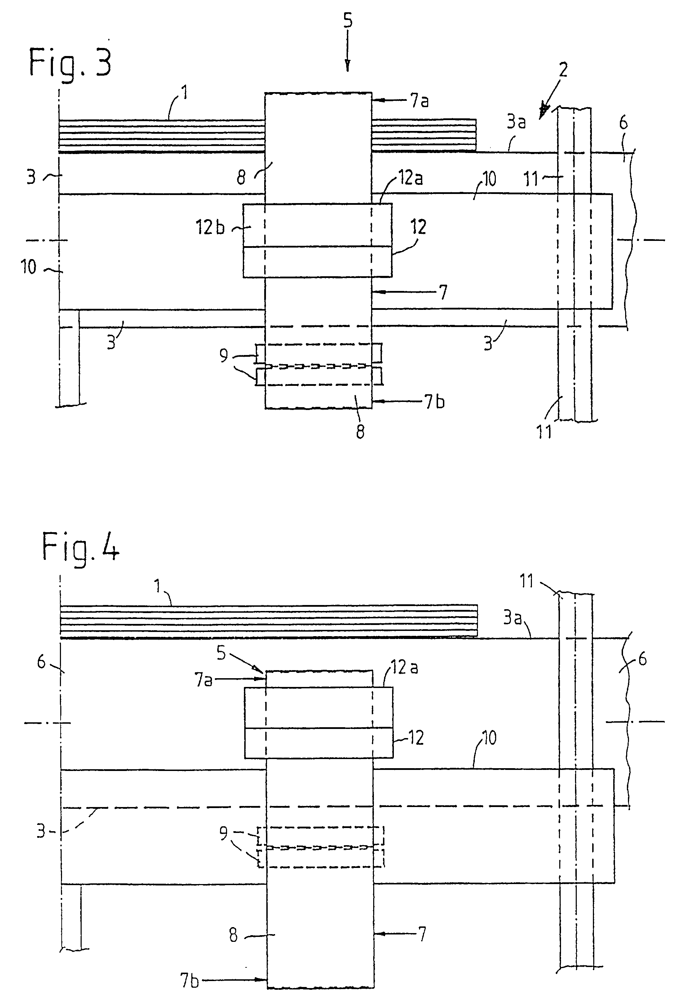

Nachstehend wird die Erfindung an einem Ausführungsbeispiel anhand der Zeichnungen näher erläutert. In den Zeichnungen zeigen: Fig. 1 einen Längsschnitt durch eine Vorrichtung zum intermittierenden Weitergeben von Gegenständen im Bereich eines mit einem, stationären und einem beweglichen Abstreifer zusammenwirkenden Anschlag bei angehobenem Anschlag, Fig. 2 einen Längsschnitt durch die Vorrichtung der Fig. 1 bei abgesenktem Anschlag, Fig. 3 eine Stirnansicht der Fig. 1 ohne beweglichem Abstreifer, und Fig. 4 eine Stirnansicht der Fig. 2 ohne beweglichem Abstreifer.

### Beschreibung von Ausführungsbeispielen:

In den Zeichnungen ist eine Vorrichtung zum intermittierenden Weitergeben von Gegenständen dargestellt, die rechteckige und mit einer Streichmasse gefüllte Waffelblöcke 1 in einem vorgegebenen Arbeitstakt an einen nachgeordneten (nicht dargestellten) Anlagenabschnitt einer Produktionsanlage weitergibt. Bei dem dargestellten Anlagenabschnitt ist die, die Gegenstände 1 vorschiebende Vorrichtung 2 eine, mit einem endlosen Transportband 3 ausgestattete Transportvorrichtung, die mit dem oberen Trum 3a ihres Transportbandes 3 die Transportebene für die Waffelblöcke 1 bildet und die Waffelblöcke 1 in Transportrichtung 4 vorschiebt. Die beiden Anschläge 5 sind quer zur Transportrichtung 4 nebeneinander, jeweils nahe einem Seitenrand der Bewegungsbahn der Waffelblöcke 1 angeordnet und werden gemeinsam vertikal angehoben bzw. abgesenkt.

Die die Gegenstände vorschiebende Vorrichtung kann auch von der Arbeitsmaschine eines Anlagenabschnittes der Produktionsanlage oder auch von einer Transportvorrichtung anderer Bauart gebildet werden. Die absenkbaren Anschläge sind dann der betreffenden Arbeitsmaschine bzw. der betreffenden Transportvorrichtung unmittelbar nachgeordnet und können in einen eigenen, der betreffenden Arbeitsmaschine bzw. Transportvorrichtung unmittelbar nachgeordneten Anlagenteil oder in den Anlagenabschnitt der betreffenden Arbeitsmaschine bzw. Transportvorrichtung selbst integriert sein.

Das endlose Transportband 3 läuft über eine, in einem (nicht dargestellten) stationären Gestell drehbar gelagerte, vordere Umlenkwalze 6, der die Vorderseiten der beiden Anschläge 5 zugewandt sind.

Die Anschläge 5 bestehen jeweils aus einem Formkörper 7 und einem gegenüber diesem bewegbaren Band 8. Der Formkörper 7 ist als vertikal angeordnete, ebene Platte ausgebildet, die an ihrer Oberkante 7a und an ihrer Unterkante 7b jeweils abgerundet ist und über deren Außenseite jeweils ein Band 8 als Bandschlaufe vertikal herumgelegt ist. Die Bandschlaufe ist mit ihren Bandenden unterhalb der Umlenkwalze 6 zwischen der Umlenkwalze 6 und dem Formkörper 7 in einer Haltevorrichtung 9 am Gestell fixiert. Das Band 8 erstreckt sich von der Haltevorrichtung 9 weg entlang der Vorderseite des Formkörpers 7 nach oben, über dessen Oberkante 7a zu dessen Rückseite und entlang dieser nach unten und über dessen Unterkante 7b zurück zu dessen Vorderseite und an dieser nach oben zurück zur Haltevorrichtung 9.

Ein Teilbereich der Bandschlaufe bildet eine bewegliche Anschlagfläche, die durch eine Relativbewegung der Bandschlaufe entlang der Außenseite des Formkörpers aus einer, der vorderen Stirnseite der Waffelblöcke 1 zugeordneten Arbeitsstellung an der Vorderseite des Formkörpers 7 in eine, von der vorderen Stirnseite der Waffelblöcke 1 entfernte Ruhestellung an der Rückseite des Formkörpers 7 bewegt werden kann.

Die beiden Formkörper 7 sind auf einem horizontalen Querträger 10 befestigt, der quer zur Transportrichtung 4 angeordnet ist und seitlich außerhalb der Bewegungsbahn der Waffelblöcke 1 mit vertikalen Förderorganen 11 verbunden ist. Diese sind Teil eines Bewegungsmechanismus, der die beiden Anschläge 5 zwischen einer oberen Stellung und einer unteren Stellung hin und her bewegt. Die vertikalen Förderorgane 11 können mit dem Querträger 10 über Gewindehülsen im Eingriff stehende Gewindespindeln sein, die zum vertikalen Verstellen der Anschläge 5 in Rotation um ihre eigenen Drehachsen versetzt werden können.

In der oberen Stellung der Anschläge 5 stehen diese mit den Oberkanten 7a ihrer Formkörper 7 und mit den beweglichen Anschlagflächen ihrer Bänder 8 über die Bewegungsbahn der Waffelblöcke 1 nach oben vor. In dieser Stellung der Anschläge 5 schiebt das Transportband 3 einen Waffelblock 1 in Transportrichtung 4 vor bis dieser von den beiden Anschlägen 5 angehalten wird. Dabei stößt der Waffelblock 1 mit seiner vorderen Stirnseite gegen die beiden beweglichen Anschlagflächen, die sich jeweils in ihrer Arbeitsstellung befinden, und drückt die Bänder 8 der Anschläge 5 gegen die Vorderseiten der Formkörper 7.

Soll der angehaltene Waffelblock 1 vom Transportband 3 in Transportrichtung 4 weitertransportiert werden, so werden die beiden Anschläge 5 abgesenkt. Dies kann nach einem vorgegebenen Zeitintervall geschehen oder durch ein Steuersignal des nachgeordneten Anlagenabschnittes oder durch die Steuerung der Produktionsanlage.

Zum Absenken der Anschläge 5 wird der Querträger 10 durch den Bewegungsmechanismus nach unten bewegt. Dadurch wird jeder Formkörper 7 innerhalb der ihn umgebenden Bandschlaufe nach unten bewegt und bewegt diese ebenfalls nach unten. Da die Bandschlaufe an einer Stelle ihres Umfanges durch die am Gestell fixierte Haltevorrichtung 9 festgehalten wird, bewegt sich die Bandschlaufe um den Formkörper 7 herum in Transportrichtung 4 weiter. Dabei wird der, die bewegliche Anschlagfläche bildende Teilbereich der Bandschlaufe in einer Schälbewegung von der vorderen Stirnseite des Waffelblockes 1 abgelöst und über die Oberkante 7a des Formkörpers 7 hinweg in seine Ruhestellung bewegt. Während dieser Schälbewegung wird der Waffelblock 1 vom betreffenden Anschlag 5 zurückgehalten bis die Schälbewegung beendet ist. Während des Ablösens der beweglichen Anschlagfläche von der vorderen Stirnseite des Waffelblockes 1 liegt dieser mit seiner vorderen Stirnseite an dem noch nicht abgeschälten Teil der beweglichen Anschlagfläche an und stützt sich über diesen Teil der beweglichen Anschlagfläche an der Vorderseite des Formkörpers 7 ab.

In der unteren Stellung der Anschläge 5 sind die Formkörper 7 mit ihren Oberkanten 7a und die Bandschlaufen unter die Bewegungsbahn der Waffelblöcke 1 abgesenkt und die, jeweils die beweglichen Anschlagflächen bildenden Teilbereich der Bänder 8 haben ihre Ruhestellung an der Rückseite des jeweiligen Formkörpers 7 erreicht.

Hat der Waffelblock 1 die abgesenkten Anschläge 5 mit seiner hinteren Stirnseite passiert, so werden die beiden Anschläge 5 aus ihrer unteren Stellung in ihre obere Stellung angehoben. Während des Anhebens der Anschläge 5 bewegen sich die Formkörper 7 mit den Bandschlaufen nach oben und die Bandschlaufen laufen um die in Bewegung befindlichen Formkörper 7 entgegen der Transportrichtung 4 um. Dabei werden die, die beweglichen Anschlagflächen bildenden Teilbereiche der beiden Bänder 8 aus ihren Ruhestellungen an der Rückseite des jeweiligen Formkörpers 7 zurück in ihre Arbeitsstellungen an der Vorderseite des jeweiligen Formkörpers 7 transportiert.

Bei jedem Anschlag 5 ist unterhalb der, vom oberen Trum 3a des Transportbandes 3 gebildeten Transportebene ein stationärer Abstreifer 12 vorgesehen, der an der Rückseite des betreffenden Formkörpers 7 angeordnet und am Gestell fixiert ist. Der Abstreifer 12 besitzt eine obere Abstreifkante 12a, die der Rückseite des Formkörpers 7 benachbart angeordnet ist und von der Außenseite des Bandes 8 an dieser haften gebliebene Cremereste abstreift, wenn das zwischen der Rückseite des Formkörpers 7 und dem Abstreifer 12 durchlaufende Band 8 den Formkörper 7 in Transportrichtung 4 umläuft. Die von der Außenseite des Bandes abgestreiften Cremereste werden an eine, an die obere Abstreifkante 12a anschließende, schräg nach unten abfallende Fläche 12b des Abstreifers 12 übergeben. Beim Absenken der Anschläge 5 wird der Querträger 10 so weit nach unten bewegt, daß die, jeweils die beweglichen Anschlagflächen bildenden Teilbereiche der Bänder 8 durch die Umlaufbewegungen der Bandschlaufen an den Abstreifkanten 12a der stationären Abstreifer 12 vorbei bewegt werden. Die stationären Abstreifer 12 sind entlang der Bewegungsbahn der beweglichen Anschlagflächen jeweils zwischen der Arbeitsstellung und der Ruhestellung der betreffenden beweglichen Anschlagfläche angeordnet.

Es läßt sich praktisch nicht vermeiden, daß sich Cremereste auf der obere Abstreifkante 12a aufbauen und beim Hochgehen des Anschlages 5 vom Band 8 wieder mitgenommen werden. Um dies zu verhindern kann unterhalb der Transportebene für die Waffelblöcke 1 ein beweglicher Abstreifer 13 zusätzlich zum stationären Abstreifer 12 oder auch anstatt des stationären Abstreifers 12 vorgesehen sein. Der bewegliche Abstreifer 13 kann entgegen der Transportrichtung 4 zwischen einer Arbeitsstellung (Fig. 2) und einer Ruhestellung (Fig. 1) hin und her bewegbar oder schwenkbar angeordnet sein. Der bewegliche Abstreifer 13 besitzt eine, der Rückseite des Formkörpers 7 zugewandte, untere Abstreifkante 13a, die in der Arbeitsstellung des Abstreifers 13 der Rückseite des Formkörpers 7 benachbart angeordnet ist. In der Arbeitsstellung des beweglichen Abstreifers 13 werden an dessen unterer Abstreifkante 13a auf der Außenseite des Bandes 8 haften gebliebene Cremereste abgestreift, wenn das auf der Außenseite des Formkörpers 7 anliegende Band 8 zwischen der Rückseite des Formkörpers 7 und dem beweglichen Abstreifer 13 entgegen der Transportrichtung 4 umläuft. Die beweglichen Abstreifer 13 sind entlang der Bewegungsbahn der beweglichen Anschlagflächen ebenfalls jeweils zwischen der Arbeitsstellung und der Ruhestellung der betreffenden beweglichen Anschlagfläche angeordnet.

Im Gegensatz zu den stationären Abstreifern 12, die beim Absenken der Formkörper 7 zum Einsatz kommen, werden die beweglichen Abstreifer 13 beim Anheben der Formkörper 7 eingesetzt.

## Patentansprüche

1. Vorrichtung zum intermittierenden Weitergeben von Gegenständen (1), insbesondere von mit Creme beschichteten Waffelblättern oder mit Creme gefüllten Waffelblöcken oder dergleichen, bei welcher einer die Gegenstände (1) in einer Transportebene in Transportrichtung (4) vorschiebenden Vorrichtung (2) zumindest ein unter die Transportebene absenkbarer Anschlag (5) nachgeordnet ist, welcher eine der vorderen Stirnseite der Gegenstände (1) zugeordnete Anschlagfläche besitzt und durch einen Bewegungsmechanismus (10,11) zwischen einer oberen Stellung, in der er mit seiner Anschlagfläche über die Transportebene nach oben vorsteht, und einer unteren Stellung, in der er unter die Transportebene abgesenkt ist, hin und her bewegbar ist, wobei entlang der Bewegungsbahn der Anschlagfläche zumindest ein dieser zugeordneter Abstreifer (12,13) vorgesehen ist, **dadurch gekennzeichnet, daß** der Anschlag (5) aus einem vom Bewegungsmechanismus auf und ab bewegbaren Formkörper (7) und aus einer gegenüber diesem beweglichen Anschlagfläche besteht, die aus einer der vorderen Stirnseite der Gegenstände (1) zugeordneten Arbeitsstellung in eine davon entfernte Ruhestellung bewegbar ist und von einem, zumindest entlang der der vorderen Stirnseite der Gegenstände (1) zugewandten Vorderseite des Formkörpers (7) bewegbaren Band (8) gebildet wird.

2. Vorrichtung nach Anspruch 1, **dadurch gekennzeichnet, daß** das Band (8) auf der Außenseite des Formkörpers (7) anliegt, diesen zumindest teilweise umschließt und mit einem Teilbereich die bewegliche Anschlagfläche bildet.

3. Vorrichtung nach Anspruch 1 oder 2, **dadurch gekennzeichnet, daß** die bewegliche Anschlagfläche als Teil einer, den Formkörper (7) an seiner Vorderseite und an seiner Rückseite bedeckenden, beweglichen Bandschlaufe ausgebildet ist, die mit ihrem, die bewegliche Anschlagfläche bildenden Teilbereich aus der an der Vorderseite des Formkörpers (7) angeordneten Arbeitsstellung in die an der Rückseite des Formkörpers (7) angeordnete Ruhestellung bewegbar ist.

4. Vorrichtung nach Anspruch 3, **dadurch gekennzeichnet, daß** die bewegliche Bandschlaufe unterhalb der Transportebene zwischen der die Gegenstände (1) vorschiebenden Vorrichtung (2) und der Bewegungsbahn des Formkörpers (7) stationär fixiert ist und durch die Bewegungen des Formkörpers (7) auf und ab bewegbar ist, wobei der die bewegliche Anschlagfläche bildende Teilbereich der Bandschlaufe durch Absenken des Formkörpers (7) aus der Arbeitsstellung über die Oberseite des Formkörpers (7) hinweg in Transportrichtung (4) bis in die Ruhestellung und durch Anheben des Formkörpers (7) aus der Ruhestellung entgegen der Transportrichtung (4) über die Oberseite des Formkörpers (7) hinweg bis in die Arbeitsstellung bewegbar ist.

5. Vorrichtung nach einem der Ansprüche 1 bis 4, **dadurch gekennzeichnet, daß** entlang der Bewegungsbahn des die bewegliche Anschlagfläche bildenden Teilbereiches des Bandes (8) zumindest ein stationärer Abstreifer (12) vorgesehen ist, der der sich aus der Arbeitsstellung in die Ruhestellung bewegenden, beweglichen Anschlagfläche zugeordnet ist.

6. Vorrichtung nach einem der Ansprüche 1 bis 5, **dadurch gekennzeichnet, daß** entlang der Bewegungsbahn des die bewegliche Anschlagfläche bildenden Teilbereiches des Bandes (8) zumindest ein beweglicher Abstreifer (13) vorgesehen ist, der der sich aus der Ruhestellung in die Arbeitsstellung bewegenden, beweglichen Anschlagfläche zugeordnet ist.

## Claims

1. An apparatus for the intermittent conveyance of objects (1), especially cream-coated wafers or wafer blocks filled with cream, or similar, wherein at least one detent, which can be lowered beneath the transport plane, is disposed downstream of an apparatus (2) which moves the objects (1) forward in a transportation plane in the direction of transportation, this detent having a detent face which is assigned to the front face side of the object (1) and being moveable by means of a movement mechanism (10, 11) backwards and forwards between an upper position in which it projects upwards with its detent surface above the transportation plane and a lower position in which it is lowered beneath the transportation plane, wherein at least one scraper (12, 13) is provided, and is assigned to, the path of movement of the detent surface, **characterised in that** the detent (5) comprises a moulded body (7) which can be moved up and down by a movement mechanism and a detent surface which is moveable with regard to this, the detent being moveable from a working position assigned to the front face side of the objects (1) to a rest position which is remote therefrom, and formed by a moveable belt (8) which can be moved at least along the front side of the moulded body (7) which faces the front face side of the objects (1).

2. An apparatus according to claim 1, **characterised in that** the belt (8) lies against the outside of the moulded body (7) and partially encloses this, and forms the moveable detent surface with a partial area.

3. An apparatus according to claim 1 or 2, **characterised in that** the moveable detent surface is configured as a part of a moveable belt loop which covers the moulded body (7) on its front side and its rear side, this belt loop being moveable with its partial area which forms the moveable detent surface from a working position disposed on the front side of the moulded body (7) to a rest position disposed on the rear side of the moulded body (7).

4. An apparatus according to claim 3, **characterised in that** the moveable belt loop is fixed in a stationary manner underneath the transportation plane between the apparatus (2) which moves the objects (1) and the plane of movement of the moulded body (7) and can be moved up and down by the movement of the moulded body (7), wherein by lowering the moulded body (7), the partial area of the belt loop which forms the moveable detent surface can be moved in the direction of transportation (4) over the upper side of the moulded body (7) from the working position to the rest position and by raising the moulded body (7) from the rest position in a direction counter to the direction of transportation (4) over the upper side of the moulded body (7) into the working position.

5. An apparatus according to one of claims 1 to 4, **characterised in that** at least one stationary scraper (12) is disposed along the plane of movement of the partial area of the belt (8) which forms the moveable detent surface, this scraper being assigned to the moveable detent surface which moves from the working position into the rest position.

6. An apparatus according to one of claims 1 to 5, **characterised in that** at least one moveable scraper (13) is disposed along the plane of movement of the partial area of the belt (8) which forms the moveable detent surface, this scraper being assigned to the moveable detent surface which moves from the rest position into the working position.

## Revendications

1. Dispositif destiné à acheminer par intermittence des objets (1), en particulier des feuilles de gaufrettes recouvertes de crème ou des blocs de gaufrettes fourrés de crème ou des éléments analogues, dans lequel dispositif au moins un butoir (5) susceptible d'être abaissé en dessous du plan de transport est monté en aval d'un dispositif (2) qui pousse les objets (1) dans le plan de transport dans le sens de transport (4), lequel butoir est muni d'une surface de butée associée à la face frontale avant des objets (1) et peut effectuer, au moyen d'un dispositif mécanique (10, 11), un mouvement de va et vient entre une position supérieure, dans laquelle il se positionne avec sa surface de butée en saillie vers le haut au-dessus du plan de transport, et une position inférieure, dans laquelle il est abaissé en dessous du plan de transport, sachant qu'au moins un racloir (12, 13) associé à la surface de butée est prévu le long de la voie de déplacement de la surface de butée, **caractérisé en ce que** le butoir (5) est formé par un corps profilé (7), susceptible de se déplacer vers le haut et vers le bas au moyen d'un dispositif mécanique, et par une surface de butée mobile par rapport au corps profilé, laquelle peut se déplacer à partir d'une position de travail associée à la paroi frontale avant des objets (1) vers une position de repos éloignée de celle-ci et est formée par une bande (8) qui peut se déplacer au moins le long de la face avant du corps profilé (7) orientée vers la face frontale avant des objets (1).

2. Dispositif selon la revendication 1, **caractérisé en ce que** la bande (8) est en appui contre la face extérieure du corps profilé (7), entoure celui-ci au moins en partie et forme avec une zone partielle la surface de butée mobile.

3. Dispositif selon la revendication 1 ou 2, **caractérisé en ce que** la surface de butée mobile est conçue comme une zone partielle d'une boucle sans fin mobile en contact sur le corps profilé (7) sur son côté avant et son côté arrière, laquelle boucle sans fin avec sa zone partielle formant la surface de butée mobile peut être déplacée à partir de la position de travail située sur le côté avant du corps profilé (7) vers la position de repos située sur le côté arrière du corps profilé (7).

4. Dispositif selon la revendication 3, **caractérisé en ce que** la boucle sans fin mobile est fixée de manière stationnaire en dessous du plan de transport, entre le dispositif (2) poussant les objets (1) et la voie de déplacement du corps profilé (7) et peut être déplacée vers le haut et vers le bas par les mouvements du corps profilé (7), sachant que la zone partielle de la boucle sans fin formant la surface de butée mobile peut être entraînée par un mouvement vers le bas du corps profilé (7) hors de la position de travail en passant dans le sens de transport (4) au-dessus du côté supérieur du corps profilé (7) jusque vers la position de repos et par un mouvement vers le haut du corps profilé (7) hors de la position de repos en passant dans le sens inverse du sens de transport (4) au-dessus du côté supérieur du corps profilé (7) jusque vers la position de travail.

5. Dispositif selon l'une quelconque des revendications 1 à 4, **caractérisé en ce que** le long de la voie de déplacement de la zone partielle de la bande (8), formant la surface de butée mobile, il est prévu au moins un racloir (12) fixe, qui est associé à la surface de butée mobile qui se déplace de la position de travail vers la position de repos.

6. Dispositif selon l'une quelconque des revendications 1 à 5, **caractérisé en ce que** le long de la voie de déplacement de la zone partielle de la bande (8), formant la surface de butée mobile, il est prévu au moins un racloir (13) mobile, qui est associé à la surface de butée mobile qui se déplace de la position de repos vers la position de travail.
